# EUROPÄISCHE PATENTSCHRIFT

(11) **EP 1 004 129 B1**
(45) Veröffentlichungstag und Bekanntmachung des Hinweises auf die Patenterteilung: **09.01.2002**
(21) Anmeldenummer: 98947375.6
(22) Anmeldetag: 03.08.1998
(51) Int. Cl.: H01H 83/14, H02H 3/05

(54) **SCHUTZEINRICHTUNG**
PROTECTIVE SWITCHGEAR
DISPOSITIF DE PROTECTION

(30) Priorität: 14.08.1997 DE 19735416
(43) Veröffentlichungstag der Anmeldung: 31.05.2000
(73) Patentinhaber: SIEMENS AKTIENGESELLSCHAFT, 80333 München (DE)
(72) Erfinder: KLEEMEIER, Manfred, D-93073 Neutraubling (DE)
(86) Internationale Anmeldenummer: DE9802214
(87) Internationale Veröffentlichungsnummer: WO9909573

(56) Entgegenhaltungen:
- DE-A- 2 428 993
- DE-A- 19 537 011

## Beschreibung

Die Erfindung bezieht sich auf eine Schutzeinrichtung, insbesondere auf eine Fehlerstrom-Schutzeinrichtung, mit einer Erfassungsschaltung zum Ansteuern eines ersten Auslösers für ein Schaltschloß, das zur Betätigung mindestens eines Schaltkontaktes an einen beweglichen Kontaktarm gekoppelt ist, im einzelnen nach Gattungsbegriff von Anspruch 1. Hierbei ist eine Überwachungseinrichtung vorgesehen, die zum Ansteuern eines zweiten Auslösers dient, der mittels eines Kraftspeichers Kontakte öffnet.

Bei einer derartigen bekannten Schutzeinrichtung (DE-A1-195 37 011) arbeitet entweder der erste Auslöser und der zweite Auslöser gemeinsam auf ein Schaltschloß, wobei der zweite Auslöser über das Schaltschloß die Schaltkontakte auch dann öffnen soll, wenn der erste Auslöser versagt. Bei einer Blockade des Schaltschlosses kann auch der zweite Auslöser die Schaltkontakte nicht öffnen. Nach einer anderen Ausführung der bekannten Schutzeinrichtung arbeitet ein erster Auslöser über ein erstes Schaltschloß auf erste Schaltkontakte und ein zweiter Auslöser über ein zweites Schaltschloß auf in Reihe zu den ersten Schaltkontakten angeordnete weitere Schaltkontakte.

Eine Schutzeinrichtung in Form eines Fehlerstrom-Schutzschalters dient zur Sicherstellung des Schutzes gegen einen gefährlichen Fehlerstrom in einer elektrischen Anlage. Ein solcher Fehlerstrom tritt auf, wenn ein spannungsführendes Leitungsteil einen elektrischen Kontakt nach Masse aufweist. Dies ist beispielsweise dann der Fall, wenn eine Person ein spannungsführendes Teil einer elektrischen Anlage berührt. Der Fehlerstrom fließt dann über die Person als Körperstrom nach Masse ab. Die zum Schutz gegen gefährliche Körperströme eingesetzten Fehlerstrom-Schutzeinrichtungen müssen dann bei einem Fehlerstrom, der vorzugsweise kleiner als ein vorgegebener Grenzwert ist, sicher und schnell die elektrische Anlage vom Netz trennen.

Der Aufbau einer Fehlerstrom-Schutzeinrichtung ist beispielsweise aus "etz", Band 107 (1986), Heft 20, Seiten 938 bis 945, bekannt. Bei den dort dargestellten und beschriebenen Prinzipschaltbildern und Funktionsprinzipien einer Schutzeinrichtung werden zwei unterschiedliche Grundtypen unterschieden. Der als Fehlerstrom-Schutzschalter bezeichnete FI-Schutzschalter ist eine Fehlerstrom-Schutzeinrichtung, in der die zum Schaltvorgang erforderliche elektrische Leistung netzspannungsunabhängig aus dem Fehlerstrom selbst gewonnen wird. Demgegenüber handelt es sich beim sogenannten Differenzstrom- oder DI-Schutzschalter um eine Schutzeinrichtung, bei der die zum Schaltvorgang erforderliche elektrische Hilfsenergie aus dem Netz entnommen wird. Ein solcher DI-Schalter wird somit über ein Netzteil betrieben, das die Netzspannung in die zum Betrieb seiner Komponenten erforderliche Versorgungsspannung umwandelt.

Insbesondere von Fehlerstrom-Schutzeinrichtungen wird ein hohes Maß an Sicherheit und Zuverlässigkeit gefordert. So wird beispielsweise von der Berufsgenossenschaft der Feinmechanik und Elektrotechnik in Anlehnung an die IEC 1508 gefordert, Fehlerstrom-Schutzeinrichtungen mit netzspannungsunabhängiger Auslösung gegen Einfachfehler mittels einer elektronischen Testung zu überprüfen. Bei dieser Überprüfung wird auf einen Auslöser- in der Regel eine Auslösespule eines Auslöserelais - ein Prüfimpuls gegeben und die Reaktion des Systems überprüft. Werden im System Ausfälle erkannt, so erfolgt eine bleibende Abschaltung des Systems.

Der Erfindung liegt nun die Aufgabe zugrunde, eine Schutzeinrichtung, insbesondere eine Fehlerstrom-Schutzeinrichtung anzugeben, mit der bei einem Systemausfall mit einfachen Mitteln eine bleibende Abschaltung mit einer Trennung des zu schützenden Stromkreises möglich ist.

Diese Aufgabe wird erfindungsgemäß durch eine Schutzeinrichtung nach Anspruch 1 gelöst. Hierbei ist der zumindest eine bewegliche Kontaktarm mit einer diesen tragenden Schaltwelle gekoppelt, wobei auf den oder jeden Schaltkontakt die Überwachungseinrichtung durch Vorkehrungen zur Zwangsöffnung einwirkt. Weiter sind Vorkehrungen zum Entkoppeln des Schaltschlosses von der Schaltwelle vorgesehen. Ein von der Überwachungseinrichtung angesteuerter zweiter Auslöser bewirkt einerseits die Zwangsöffnung der vom Schaltschloß betätigten Schaltkontakte bei einem Systemfehler oder Systemausfall und andererseits zur Entkopplung des Schaltschlosses von einer die Schaltkontakte tragenden Schaltwelle.

Die Schutzeinrichtung ermöglicht in besonders einfacher Art und Weise eine bleibende Zwangsabschaltung unter Verwendung der bereits in der Schutzeinrichtung vorhandenen Schaltkontakte, indem diese bei gleichzeitiger Entkopplung vom Schaltschloß praktisch unabhängig von der eigentlichen Erfassung geöffnet werden. Dazu ist ein direkt oder indirekt mit dem weiteren Auslöser gekoppelter verschiebbarer Schaltbügel vorgesehen, der sowohl mit dem Schaltschloß als auch mit den beweglichen Schaltkontakten einer Schaltmechanik zusammenwirkt. Der Einsatz einer zusätzlichen Anschaltvorrichtung in Form eines getrennten Kontakcapparates ist somit vermieden.

In zweckmäßiger Ausgestaltung ist der Schaltbügel L-förmig ausgebildet. Dabei wirkt einerseits ein mit der Schaltwelle bleibend in Wirkverbindung stehender erster Schenkel lediglich im Normalbetrieb oder im fehlerfreien Betrieb der Schutzeinrichtung auch mit dem Schaltschloß zusammen, während bei einer Zwangsabschaltung über diesen Schenkel die Entkopplung des Schaltschlosses erfolgt. Andererseits wirkt der Schaltbügel über dessen zweiten Schenkel mit einer Anzahl von den Schaltkontakten zugeordneten Federn zusammen, indem dieser Schenkel die Federn im Normalbetrieb und bei betriebsbedingten Ein- und Ausschaltvorgängen des Schutzschalters in vorgespanntem Zustand abgeschlossen hält.

Bei einer Zwangsabschaltung erfolgt eine Freigabe der Federn vom Schaltbügel, indem dieser infolge einer Ansteuerung des zweiten Auslösers verschoben wird. Die Federn wirken dann zur Kontaktöffnung direkt auf die beweglichen Schaltkontakte. Dazu weisen diese Federn vorteilhafterweise einen gegenüber den für den Normalbetrieb wirksamen Kontakt- und Öffnungskräften zehnfachen (10-fachen) Kraftüberschuß auf. Dabei ist der zweckmäßigerweise parallel zur Schaltwelle verschiebbare Schaltbügel mit einer der Anzahl der Schaltkontakte entsprechenden Anzahl von Durchgangsöffnungen versehen, die bei einer Zwangsabschaltung mit den jeweiligen Federn in Überdeckung gebracht werden.

Um dabei gleichzeitig das Schaltschloß in besonders einfacher Weise von der die Schaltkontakte tragenden Schaltwelle zu entkoppeln, ist der zweckmäßigerweise in einer Ausnehmung der Schaltwelle geführte erste Schenkel des Schließbügels stirnseitig mit einer Öffnung zur Aufnahme eines Drehknebels des Schaltschlosses versehen. Bei einer Verschiebung des Schaltbügels infolge einer Zwangsabschaltung wird dieser Schenkel, vorzugsweise gegen die Kraft einer Feder, in die Ausnehmung eingeschoben und dadurch das Schaltschloß von der Schaltwelle entkoppelt. Der Schaltbügel wirkt somit in der Art einer Kupplung zwischen dem Schaltschloß und der Schaltwelle.

Der zweite Auslöser ist zweckmäßigerweise ein Aktor in Form eines Ruhe- oder Arbeitsstrom-Relais. Bei einer Ausführung als Ruhestrom-Relais ist der Schaltbügel zweckmäßigerweise mit einer Zugfeder verbunden, deren Kraftwirkung auf den Schaltbügel durch Lösen einer Verklinkung mittels des Auslösers freigegeben wird. Bei einer Ausführung als Arbeitsstrom-Relais kann der Auslöser entweder über einen Auslösestößel direkt oder in Verbindung mit einer Druckfeder indirekt auf den Schaltbügel wirken.

Die mit der Erfindung erzielten Vorteile bestehen insbesondere darin, daß durch den Einsatz lediglich eines zusätzlichen Auslösers, der in einem redundanten Erfassungszweig über eine Überwachungseinrichtung ansteuerbar ist, und der einerseits auf die bereits vorhandenen Schaltkontakte und andererseits auf das vorhandene Schaltschloß direkt oder indirekt einwirkt, eine Schutzeinrichtung besonders einfach mit einer Zwangsabschaltung ausrüstbar oder nachrüstbar ist. Dadurch können bei gleichzeitig platzsparendem Aufbau der Schutzeinrichtung auch im Falle eines erkannten Systemfehlers oder Systemausfalls die Schaltleistungsfähigkeit sowie die gegebenen Trenneigenschaften der vorhandenen Schaltkontakte bestmöglich genutzt werden.

Die Schutzeinrichtung ist besonders vorteilhaft fur zwei- bis vierpolige Fehlerscrom-Schutzschalter anwendbar. Dabei kann der redundant ausgaführte Erfassungszweig, d.h. die zusätzliche Uberavachungsfunktion, sowohl fremdspannungsabhängig als auch fremdspannungsunabhängig ausgeführt sein. Prinzipiell ist eine Anwendung auch für andere Schaltgeräte, z.B. für einen Leitungsschutzschalter, möglich.

Ausführungsbeisoiele der Erfindung werden anhand einer Zeichnung näher erläutert. Darin zeigen:
- FIG 1: in einem Blockschaltbild eine erfindungsgemäße Schutzeinrichtung mit Überwachungsfunktion und Zwangsabschaltung,
- FIG 2: in einer perspektivischen Darstellung im Ausschnitt eine Schaltmechanik der Schutzeinrichtung gemäß FIG 1, und
- FIG 3 bis 6: schematisch unterschiedliche Ansichten zweier Schaltpositionen einer Fehlerstrom-Schutzeinrichtung.

Einander entsprechende Teile sind in allen Figuren mit den gleichen Bezugszeichen versehen,

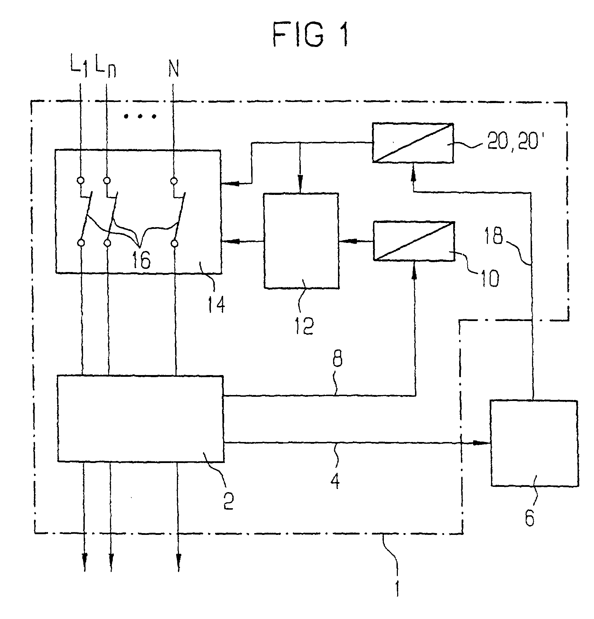

Gemäß FIG 1 ist an ein mehrphasiges Netz L1 bis Ln, N eine Schutzeinrichtung 1 mit einer Erfassungsschaltung 2 in Form eines Summenstromwandlers mit nachgeordneter (nicht dargestellter) Auslöseschaltung angeschlossen, in der das in einer Sekundarwicklung des Summenstromwandlers erzeugte Spannungssignal verarbeitet wird. Die Erfassungseinrichtung 2 ist sekundärseitig einerseits über eine Signalleitung 4 mit einer Überwachungseinrichtung 6 und anderseits über eine Steuerleitung 8 mit einem ersten Auslöser 10, beispielsweise mit einem Auslöserelais, verbunden. Der Auslöser 10 wiederum ist mechanisch mit einem Schaltschlöß 12 einer Schaltmechanik 14 gekoppelt.

Die Erfassungseinrichtung 2 dient zur Detektion eines Fehlerstroms im vom Netz Ln, N gespeisten und von der Schutzeinrichtung zu schützenden Stromkreis. Sobald von der Erfassungseinrichtung 2 ein Fehlerstrom detektiert wird und dieser einen Schwellwert überschreitet, erfolgt über die Steuerleitung 8 eine Ansteuerung des ersten Auslösers 10, der daraufhin durch Entklinken des Schaltschlosses 12 eine Abschaltung der Schaltmechanik 14 mit einer Öffnung deren Schaltkontakte oder Schaltkontaktpaare 16 bewirkt.

Die Überwachungseinrichtung 6 dient als quasi redundanter Erfassungszweig zur Erkennung eines Systemfehlers oder -ausfalls innerhalb der Schutzeinrichtung 1. Sobald ein Versagen der Schutzeinrichtung erkannt wird, veranlaßt die Überwachungseinrichtung 6 eine Trennung des zu schützenden Stromkreises. Dazu ist die Überwachungseinrichtung 6 ausgangsseitig über eine Steuerleitung 18 mit einem zusätzlichen Aktor oder zweiten Auslöser 20 verbunden. Dieser als Ruhestrom- oder als Arbeitsstromrelais ausgelegte zweite Auslöser 20 ist mechanisch sowohl mit dem Schaltschloß 12 als auch mit der Schaltmechanik 14 gekoppelt. Bei Erkennung eines Systemfehlers erfolgt eine Ansteuerung des zweiten Auslösers 20, der daraufhin einerseits das Schaltschloß 12 entkoppelt und andererseits eine bleibende Zwangsöffnung der Schaltkontakte 16 der Schaltmechanik 14 bewirkt.

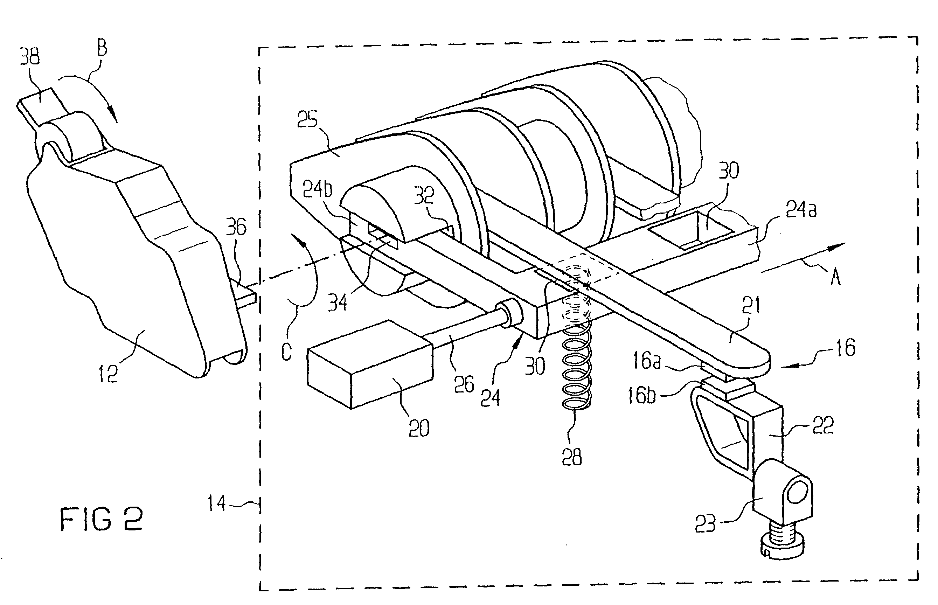

Der Aufbau und die Funktionsweise der dazu vorgesehenen Schaltmechanik 14 sind in FIG 2 veranschaulicht, wobei aus Gründen der besseren Übersicht für den Normalbetrieb vorgesehene Kontaktfedern nicht dargestellt sind. Der bewegliche Schaltkontakt 16a wird von einem Kontaktarm 21 getragen und steht dem feststehenden Schaltkontakt 16b gegenüber. Der feststehende Schaltkontakt 16b ist an einem Haltebügel 22 angeordnet, der über einen Schraubanschluß 23 mit der jeweiligen Phase Ln, N elektrisch verbunden ist.

Ein Schalt- oder Verschlußbügel 24 wirkt mit einer die beweglichen Kontaktarme 21 mit den Schaltkontakten 16a der Schaltkontaktpaare 16 tragenden Schaltwelle 25 zusammen, die wiederum mit dem Schaltschloß 12 in Wirkverbindung steht. Der L-förmig ausgebildete Schaltbügel 24 weist einen parallel zur Schaltwelle 25 verlaufenden ersten Schenkel 24a und einen dazu rechtwinklig verlaufenden zweiten Schenkel 24b auf, über den die Wirkverbindung zur Schaltwelle 25 hergestellt ist.

In der dargestellten Position des Schaltbügels 24 ist eine Zwangsabschaltung bereits erfolgt, indem der Auslöser 20 mittels dessen Auslösestößel 26 den Schaltbügel 24 in Bewegungsrichtung A verschoben hat. Bei dieser Zwangsabschaltung wird eine dem jeweiligen beweglichen Kontaktarm 21 und damit dem entsprechenden Schaltkontakt 16a zugeordnete Druckfeder 28 entspannt. Dabei wird die im Normalbetrieb oder im fehlerfreien Betrieb der Schutzeinrichtung 1 vom Schaltbügel 24 unter Vorspannung abgedeckte Druckfeder 28 durch eine korrespondierende Durchgangsöffnung 30 im zur Schaltwelle 25 parallel verlaufenden ersten Schenkel 24a des Schaltbügels 24 in Richtung auf den den beweglichen Schaltkontakt 16a tragenden Kontaktarm 21 freigegeben.

Zusammen mit dieser Freigabe der vorgespannten Druckfeder 28 erfolgt eine Entkopplung des Schaltschlosses 12. Dazu ist der in einer dem Schaltschloß 12 zugewandten Ausnehmung 32 der Schaltwelle 25 geführte zweite Schenkel 24b des Schaltbügels 24 mit einer Öffnung 34 versehen, die im Normalbetrieb einen Drehknebel 36 des Schaltschlosses 12 aufnimmt. Bei einer Zwangsabschaltung wird durch die Verschiebung des Schaltbügels 24 in Bewegungsrichtung A dieser Schenkel 24b in die Ausnehmung 32 eingeschoben, so daß der Drehknebel 36 von der Schaltwelle 25 entkoppelt wird. Eine Betätigung des Schaltschlosses 12 über dessen Schaltknebel 38 in Bewegungsrichtung B mit einer Verschwenkung des Drehknebels 36 in Bewegungsrichtung C bleibt somit wirkungslos, da der vom Schaltbügel 24 entkoppelte Drehknebel 36 aufgrund dessen gegenüber der Ausnehmung 32 der Schaltwelle 25 kleineren Abmessungen in dieser frei drehbar ist. Dadurch ist auch bei einem Versagen des Schaltschlosses 12 und unabhängig von dessen Funktionsfähigkeit die Zwangsabschaltung der Schaltmechanik 14 realisierbar.

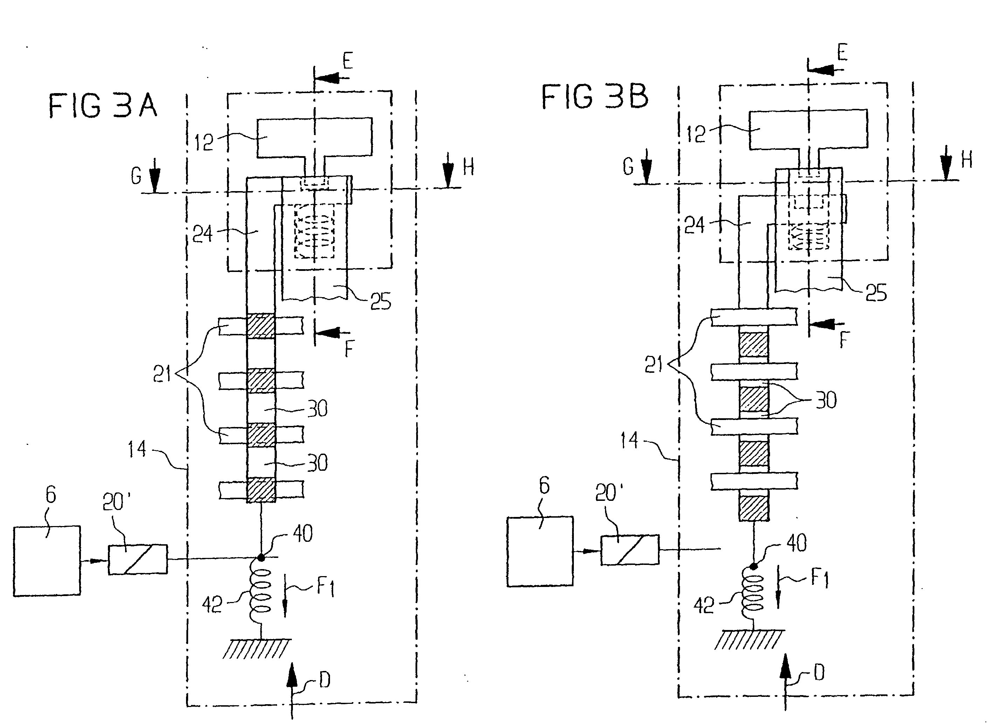

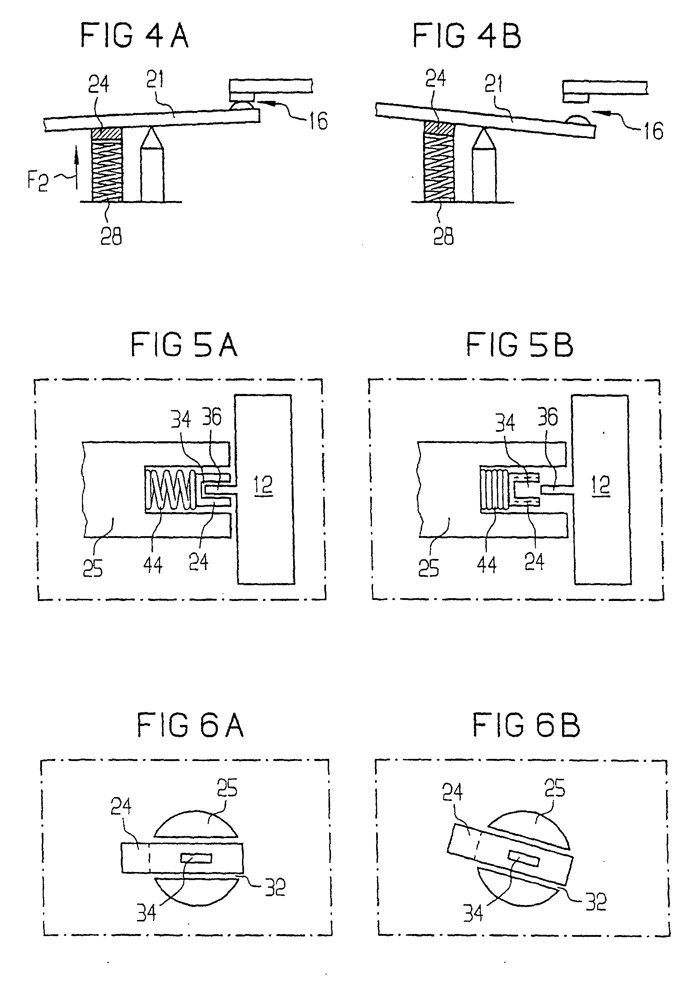

Die Figuren 3 bis 6 zeigen eine Ausführungsvariante des Schaltmechanismus für eine vierpolige, z. B. 63A-Schutzeinrichtung 1, wobei die Figuren 3a bis 6a verschiedene Ansichten im Normalbetrieb zeigen, während die Figuren 3b bis 6b die jeweiligen Positionen im Anschluß an eine Zwangsabschaltung darstellen. Im einzelnen zeigen die Figuren 3a und 3b eine Draufsicht auf die Schaltmechanik der Schutzeinrichtung 1, während die Figuren 4a und 4b die entsprechende Schaltposition entlang der Linie D der Figuren 3a bzw. 3b darstellen. Die Figuren 5a und 5b zeigen eine Schnittdarstellung entlang der Linie E-F der Figuren 3a bzw. 3b. Die Figuren 6a und 6b zeigen eine Schnittdarstellung entlang der Linie G-H der Figuren 3a bzw. 3b.

In der in FIG 3a dargestellten Position hält der Schaltbügel 24 die gespannten Druckfedern 28 abgeschlossen, wie dies in FIG 4a dargestellt ist. Nach einer Zwangsabschaltung sind die Durchgangsöffnungen 30 des Schaltbügels 24 in Überdeckung mit den zuvor abgeschlossenen Druckfedern 28 und geben diese frei, so daß die in FIG 4b dargestellte Kontaktöffnung erfolgt.

Dazu erhält der Auslöser 20' wiederum von der im redundanten Erfassungszweig angeordneten Überwachungseinrichtung 6 infolge eines erkannten Systemversagens der Schutzeinrichtung 1 einen Steuerbefehl. Dabei wirkt in diesem Ausführungsbeispiel der Auslöser 20' auf eine Fixierung oder Verklinkung 40 einer gespannten Zugfeder 42, die nach einer Ansteuerung und Freigabe des Auslösers 20' geöffnet wird. Dadurch wird der Schaltbügel 24 mittels einer Federkraft F1 der Zugfeder 42 betätigt, so daß dieser von der in FIG 3a dargestellten Position in die in FIG 3b dargestellte Position verschoben wird.

Die oder jede Druckfeder 28 ist derart positioniert, daß diese in geeigneter Weise auf den den beweglichen Schaltkontakt 16a tragenden Kontaktarm 21 wirkt. Dabei ist die Öffnungskraft F2 der Druckfeder 28 im Vergleich zu einer für den Normalbetrieb vorgesehenen Öffnungskraft deutlich, vorzugsweise um den Faktor zehn, höher ausgelegt. Dadurch kann eine Verschweißung des beweglichen Schaltkontaktes 16a mit dem korrespondierenden feststehenden Schaltkontakt 16b gelöst werden, so daß auch im Falle verschweißter Schaltkontakte 16 bei einer Zwangsabschaltung eine Kontaktöffnung und eine dadurch bedingte Stromkreisunterbrechung sichergestellt ist.

Wie in den Figuren 5a und 5b dargestellt, wird bei dieser Positionsänderung gleichzeitig mittels des Schaltbügels 24 auch die durch die Aufnahme des Drehknebels 36 in der Öffnung 34 des Schaltbügeis 24 real isierte Koppelstelle zwischen dem Schaltschloß 12 und der Schaltwelle 25 getrennt. Die Koppelstelle wirkt dabei in der Art einer Kupplung, wobei der Schaltbügel 24 über dessen Schenkel 24b gegen die Kraft einer Feder 44 in die Ausnehmung 34 der Schaltwelle 25 eingeschoben wird.

Durch diese Entkopplung wird die Schaltwelle 24, die die beweglichen Kontaktarme oder Kontaktträger 21 aufnimmt, frei beweglich und die Auslösung kann unabhängig von der Funktion des Schaltschiosses 12 erfolgen. Dies ist in den Figuren 6a und 6b veranschaulicht. Dabei ist die Abschaltung systembedingt eine einmalige Zwangsabschaltung, die nur dann zur Funktion kommt, wenn die zu überwachende Schutzeinrichtung 1 ausfällt.

## Patentansprüche

1. Schutzeinrichtung, insbesondere Fehlerstrom-Schutzeinrichtung, mit einer Erfassungsschaltung (2) zum Ansteuern eines ersten Auslösers (10) für ein Schaltschloß (12), das zur Betätigung mindestens eines Schaltkontaktes (16) an einem beweglichen Kontaktarm (21) gekoppelt ist, und mit einer Überwachungseinrichtung (6) zum Ansteuern eines zweiten Auslösers (20,21'), der mittels eines Kraftspeichers Kontakte öffnet, **dadurch gekennzeichnet, daß** der zumindest eine bewegliche Kontaktarm mit einer diesen tragenden Schaltwelle (25) gekoppelt ist, wobei auf den oder jeden Schaltkontakt (16) die Überwachungseinrichtung (6) durch Vorkehrungen zur Zwangsöffnung einwirkt und wobei Vorkehrungen zum Entkoppeln des Schaltschlosses (12) von der Schaltwelle (25) vorgesehn ist.

2. Schutzeinrichtung nach Anspruch 1, wobei der zweite Auslöser (20,20') über einen Schaltbügel (24) sowohl mit dem Schaltschloß (12) als auch mit den beweglichen Schaltkontakten (16a) einer Schaltmechanik (14) gekoppelt ist.

3. Schutzeinrichtung nach Anspruch 2, wobei der Schaltbügel (24) zur Freigabe einer dem oder jedem Schaltkontakt (16) zugeordneten vorgespannten Feder (28) verschiebbar ist und mit der Schaltwelle (25) zusammenwirkt.

4. Schutzeinrichtung nach Anspruch 3, wobei der Schaltbügel (24) parallel zur Schaltwelle (25) verschiebbar ist und eine mit der Feder (28) in Überdeckung bringbare Durchgangsöffnung (30) aufweist.

5. Schutzeinrichtung nach einem der Ansprüche 2 bis 4, wobei ein in einer Ausnehmung (32) der Schaltwelle (25) geführter Schenkel (24b) des Schließbügels (24) eine Öffnung (34) zur Aufnahme eines Drehknebels (36) des Schaltschlosses (12) aufweist.

6. Schutzeinrichtung nach Anspruch 5, wobei der Schenkel (24b) des Schließbügels (24) gegen die Kraft einer Feder (44) in die Ausnehmung (32) der Schaltwelle (25) einschiebbar ist.

7. Schutzeinrichtung nach einein der Ansprüche 2 bis 6, wobei der zweite Auslöser (20') auf eine den Schaltbügel (24) mit einer Zugfeder (42) koppelnde Verklinkung (40) wirkt.

8. Schutzeinrichtung nach einem der Ansprüche 1 bis 7, wobei die Erfassungseinrichtung (2) ein Summenstromwandler ist, der sekundärseitig mit der Überwachungseinrichtung (6) verbunden ist.

9. Schutzeinrichtung nach einem der Ansprüche 1 bis 8, wobei der zweite Auslöser (20,20') über eine Steuerleitung (18) mit der Überwachungseinrichtung (6) verbunden ist.

10. Schutzeinrichtung nach einem der Ansprüche 1 bis 9, wobei der zweite Auslöser (20,20') ein Ruhe- oder Arbeitsstromrelais ist.

## Claims

1. Protective device, in particular fault current protective device, with a sensing circuit (2) for triggering a first trip element (10) for a latching mechanism (12), which is coupled to a movable contact arm (21) for the actuation of at least one switching contact (16), and with a monitoring device (6) for triggering a second trip element (20, 21') which opens contacts by means of an energy accumulator, **characterised in that** at least one movable contact arm is coupled to the actuating shaft (25) which carries it, with the monitoring device (6) influencing each switching contact (16) through preventive measures for positive opening and with preventative measures being provided for decoupling the latching mechanism (12) from the actuating shaft (25).

2. Protective device according to Claim 1, with the second trip element (20, 20') being coupled via a switching bracket (24) both to the latching mechanism (12) and to the movable switching contacts (16a) of a switching mechanism (14).

3. Protective device according to Claim 2, with the switching bracket (24) for the release of a pre-compressed spring (28) assigned to one or each latching mechanism (16) being capable of being moved and acting in combination with the actuating shaft (25).

4. Protective device according to Claim 3, with the switching bracket (24) being capable of being moved parallel to the actuating shaft (25) and having a pass through opening (30) which can be brought to be congruent with the spring (28).

5. Protective device according to one of Claims 2 to 4, with a leg (24b) of the switching bracket (24), which travels in a recess (32) of the actuating shaft (25), having an opening (34) for receiving a rotary toggle (36) of the latching mechanism (12).

6. Protective device according to Claim 5, with the leg (24b) of the switching bracket (24) being capable of being inserted into the recess (32) of the actuating shaft (25) against the force of a spring (44).

7. Protective device according to one of Claims 2 to 6, with the second trip element (20') acting upon a latch (40) which couples the switching bracket (24) to a tension spring (42).

8. Protective device according to one of Claims 1 to 7, with the sensing mechanism (2) being a sum-current transformer which is connected on the secondary side to the monitoring device (6).

9. Protective device according to one of Claims 1 to 8, with the second trip element (20, 20') being connected via a control line (18) to the monitoring device (6).

10. Protective device according to one of Claims 1 to 9, with the second trip element (20, 20') being either a normally closed or a normally open relay.

## Revendications

1. Dispositif de protection, notamment dispositif de protection contre courant de défaut, comportant un circuit de détection (2) pour commander un premier déclencheur (10) pour un verrou de maintien (12) qui est couplé à un bras de contact mobile (21) pour l'actionnement d'au moins un contact de commutation (16) et un dispositif de surveillance (6) pour commander un deuxiême déclencheur (20, 21') qui ouvre des contacts au moyen d'un accumulateur de force, **caractérisé par le fait que** le au moins un bras de contact mobile est couplé à un arbre de commutation (25) le portant, le dispositif de surveillance (6) agissant sur le ou chaque contact de commutation (16) par des dispositions prises pour l'ouverture forcée et des dispositions étant prévues pour le découplage entre le verrou de maintien (12) et l'arbre de commutation (25).

2. Dispositif de protection selon la revendication 1, dans lequel le deuxième déclencheur (20, 20') est couplé par l'intermédiaire d'un étrier de commutation (24) aussi bien au verrou de maintien (12) qu'aux contacts de commutation mobiles (16a) d'un mécanisme de commutation (14).

3. Dispositif de protection selon la revendication 2, dans lequel l'étrier de commutation (24) est mobile pour libérer un ressort (28) précontraint associé au ou à chaque contact de commutation (16) et coopère avec l'arbre de commutation (25).

4. Dispositif de protection selon la revendication 3, dans lequel l'étrier de commutation (24) est mobile parallèlement à l'arbre de commutation (25) et comporte une ouverture de passage (30) pouvant être amenée à coïncider avec le ressort (28).

5. Dispositif de protection selon l'une des revendications 2 à 4, dans lequel une branche (24b), guidée dans un évidement (32) de l'arbre de commutation (25), de l'étrier de commutation (24) comporte une ouverture (34) pour le logement d'un levier rotatif (36) du verrou de maintien (12).

6. Dispositif de protection selon la revendication 5, dans lequel la branche (24b) de l'étrier de commutation (24) peut être poussée à l'encontre de la force d'un ressort (44) dans l'évidement (32) de l'arbre de commutation (25).

7. Dispositif de protection selon l'une des revendications 2 à 6, dans lequel le deuxième déclencheur (20') agit sur un encliquetage (40) couplant l'étrier de commutation (24) avec un ressort de traction (42).

8. Dispositif de protection selon l'une des revendications 1 à 7, dans lequel le dispositif de détection (2) est un transformateur de courant cumulé qui est relié côté secondaire au dispositif de surveillance (6).

9. Dispositif de protection selon l'une des revendications 1 à 8, dans lequel le deuxième déclencheur (20, 20') est relié par l'intermédiaire d'une ligne de commande (18) au dispositif de surveillance (6).

10. Dispositif de protection selon l'une des revendications 1 à 9, dans lequel le deuxième déclencheur (20, 20') est un relais à courant de repos ou un relais à courant de travail.
